# EUROPÄISCHE PATENTSCHRIFT

(11) **EP 0 412 253 B1**
(45) Veröffentlichungstag und Bekanntmachung des Hinweises auf die Patenterteilung: **27.07.1994**
(21) Anmeldenummer: 90110231.9
(22) Anmeldetag: 30.05.1990
(51) Int. Cl.: F16B 5/12, B60R 13/04

(54) **Befestigungselement**
Fastening element
Elément de fixation

(30) Priorität: 09.08.1989 DE 3926299
(43) Veröffentlichungstag der Anmeldung: 13.02.1991
(73) Patentinhaber: Gebr. Happich GmbH, D-42097 Wuppertal (DE)
(72) Erfinder: Marcus, Armin, D-5600 Wuppertal 1 (DE); Gebel, Thomas, D-5600 Wuppertal 1 (DE)

(56) Entgegenhaltungen:
- DE-A- 3 544 217
- DE-A- 3 707 595

## Beschreibung

Die Erfindung bezieht sich auf eine Profilleiste mit Befestigungselement zur Anordnung an Kraftfahrzeugen, insbesondere Bussen, wobei die Profilleiste an ihrer Rückseite mit einem mittig angeordneten, sich in Profilleistenlängsrichtung erstreckenden Steg ausgebildet ist und wobei das Befestigungselement aus einem Klipskörper besteht, der mit seiner Rückseite an einer Fahrzeugkarosserie festlegbar ist und der eine mittig angeordnete, längsdurchlaufende Nut zur Aufnahme des mittigen Profilleistensteges aufweist.

Profilleisten, wie sie insbesondere an Bussen zu Verschönerungszwecken zu sehen sind, werden im allgemeinen mittels Schrauben an der Fahrzeugkarosserie befestigt. Diese Befestigungsprozedur ist arbeitsaufwendig und teuer und macht zudem eine Abdeckung der Schraubenköpfe mittels Keder oder dgl. erforderlich. Neben dieser herkömmlichen Befestigungsart zeigt die DE-A-3 707 595 eine Profilleiste mit Befestigungselement, die die Merkmale des Oberbegriffs des Anspruchs 1 aufweist. Bei dieser bekannten Profilleiste mit Befestigungselement geht es darum, eine Ausrichtung der Profilleiste senkrecht zu ihrer Längsachse am Fahrzeug zu ermöglichen, wozu vorgesehen ist, daß das Befestigungselement eine ein Einrasten der Profilleiste in auswählbaren Höhenlagen ermöglichende Ausbildung aufweist.

Dem gegenüber ist es Aufgabe der vorliegenden Erfindung, eine Profilleiste mit Befestigungselement der eingangs genannten Art so zu gestalten, daß sich eine besonders einfache Montierbarkeit der Profilleiste an einer Fahrzeugkarosserie erzielen läßt.

Zur Lösung dieser Aufgabe ist erfindungsgemäß vorgesehen, daß die Profilleiste an ihrer Rückseite mit drei im Abstand nebeneinander angeordneten, sich in Profilleistenlängsrichtung parallel zueinander erstreckenden Stegen ausgebildet ist, von denen die äußeren an ihren freien Endbereichen gegeneinander gerichtete Verdickungen aufweisen und daß der Klipskörper Längsränder aufweist, die als zur Rückseite des Klipskörpers hin schräg gestellte, jedoch von der Rückseite beabstandete Federarme ausgebildet sind und dazu dienen, die Verdickungen der äußeren Profilleistenstege zu hinterrasten, daß der Klipskörper in seinem mittleren Bereich zwei in Längsrichtung gesehen hintereinander angeordnete Federzungen aufweist, die schräg nach oben gestellt sind und die Nut des Klipskörpers einmal von links und einmal von rechts her bereichsweise übergreifen, daß die freien Enden der Federzungen soweit voneinander beabstandet sind, daß der mittlere Profilleistensteg mit erheblichem Spiel durch diese hindurch in die Nut eingeführt werden kann, und daß der Abstand zwischen den Längsrändern des Klipskörpers und den freien Enden der Federzunge größer ist als der Abstand zwischen dem mittleren Profilleistensteg und der Verdickung an den äußeren Profilleistenstegen.

Durch diese erfindungsgemäße Maßnahmen wird eine besonders einfach durchzuführende, verdeckte Montage einer Profilleiste an einer Fahrzeugkarosserie erreicht. Von besonderer Bedeutung sind dabei die erfindungsgemäß vorgesehenen Federzungen, die ein leichtes Auffinden der Klipsposition einerseits und durch einseitiges Rasten der Profilleiste am Klipskörper eine Vormontage der Profilleiste andererseits ermöglichen.

Gemäß der Erfindung kann weiterhin vorgesehen sein, daß der Klipskörper mittels eines Trägerprofilstreifens an einer Fahrzeugkarosserie festlegbar ist, wobei der Trägerprofilstreifen einen Schenkel mit einem hutprofilartigen Querschnitt und mit von der Fahrzeugkarosserie abstehenden Flanschen aufweist, die von Hakenansätzen, die sich an der Rückseite des Klipskörpers befinden, hintergriffen werden.

Die Erfindung wird nachfolgend anhand der Zeichnung, die ein Ausführungsbeispiel zeigt, näher erläutert. Es zeigen
- Fig. 1: einen vertikalen Schnitt durch einen Fahrzeugseitenwandbereich mit einer daran mittels des neuen Befestigungselements befestigten Profilleiste,
- Fig. 2: eine Draufsicht auf das Befestigungselement und
- Fig. 3: einen Schnitt folgend der Linie A-A in Fig. 2.

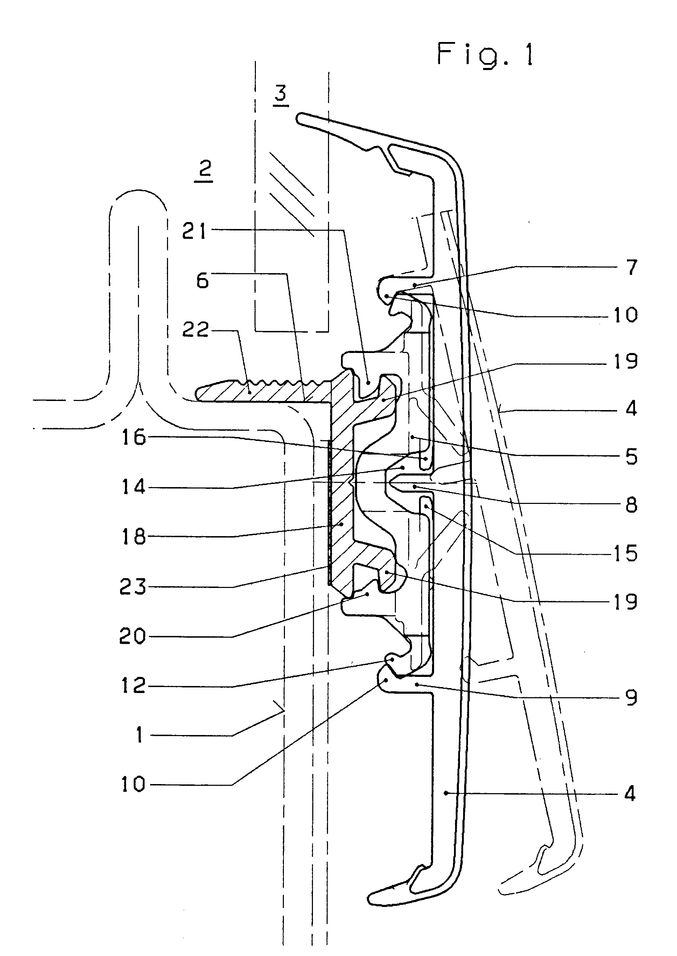

Fig. 1 zeigt einen Querschnitt durch einen lediglich strichpunktiert angedeuteten Fahrzeugseitenwandbereich 1 mit einer Fensteröffnung 2 und einer darin eingesetzten Scheibe 3 sowie eine Profilleiste 4, die mittels des neuen Befestigungselements, das aus einem Klipskörper 5 besteht, an der Fahrzeugkarosserie befestigt ist. Im dargestellten Ausführungsbeispiel wird der Klipskörper 5 über einen Trägerprofilstreifen 6, der z.B. aus Leichtmetall bestehen kann, an der Fahrzeugkarosserie gehalten. Die Profilleiste 4, die z.B. aus einem ggf. kunststoffummantelten oder kunststoffbeschichteten Aluminiumstrang gebildet ist, weist rückseitig drei im Abstand nebeneinander angeordnete, sich in Profilleistenlängsrichtung parallel zueinander erstreckende Stege auf, von denen der - auf der Zeichnung obere - mit 7, der mittlere mit 8 und der untere mit 9 bezeichnet ist. Der Abstand zwischen den Stegen 7 und 8 ist gleich dem Abstand zwischen den Stegen 8 und 9. Die Stege 7 und 9 weisen an ihren freien Endbereichen gegeneinander gerichtete Verdickungen 10 auf, die zum Verrasten mit dem Klipskörper 5 dienen. Das freie Ende des Steges 8 ist zwecks Vereinfachung der Montage abgerundet.

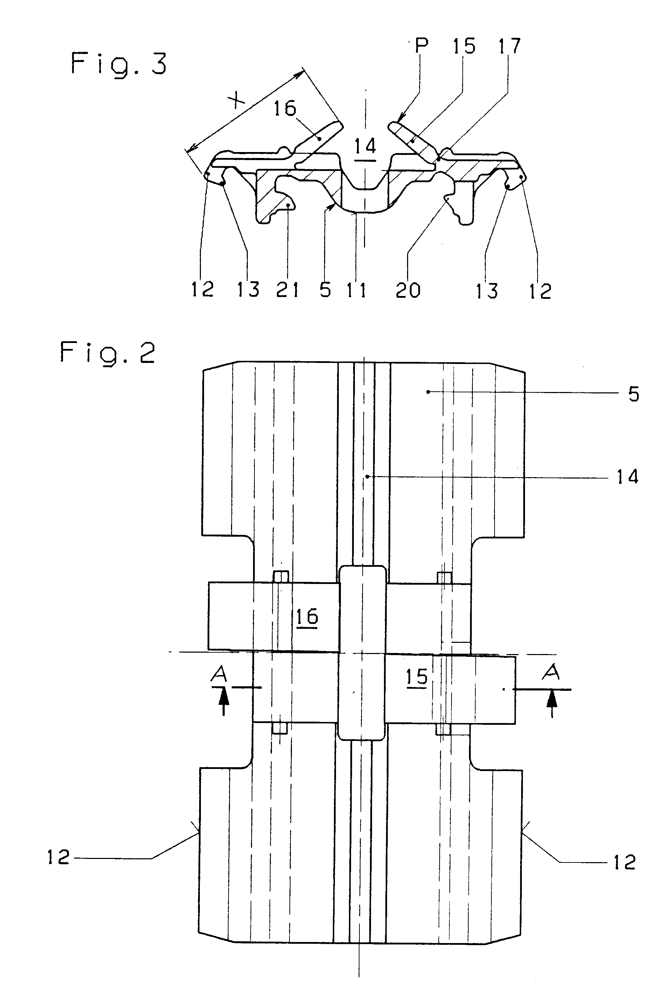

Das als Klipskörper 5 ausgebildete Befestigungselement besteht bevorzugterweise aus einem zähelastischem Kunststoffmaterial und ist im Kunststoff-Spritzgußverfahren erstellt. Der Klipskörper 5 weist eine längliche, angenähert rechteckige Grundform auf und besitzt Längsränder, die als zur Rückseite 11 des Klipskörpers 5 hin schräg gestellte, jedoch von der Rückseite beabstandete Federarme 12 mit Klipsnasen 13 ausgebildet sind. Die Längsränder des Klipskörpers 5 sind, wie insbesondere Fig. 2 zeigt, im mittleren Bereich des Klipskörpers 5 unterbrochen. Der Klipskörper 5 weist eine mittig angeordnete, längsdurchlaufende Nut 14 zur Aufnahme des Profilleistensteges 8 und weiterhin in seinem mittleren Bereich 2, in Längsrichtung des Klipskörpers 5 gesehen, hintereinander angeordnete Federzungen 15, 16 auf. Die Federzungen 15, 16 sind schräg nach oben gestellt und übergreifen die Nut 14 einmal von links und einmal von rechts geringfügig. Die freien Enden der Federzungen 15, 16 sind (vergleiche Fig. 3) soweit voneinander beabstandet, daß der mittlere Profilleistensteg 8 mit erheblichem Spiel durch diese hindurch in die Nut eingeführt werden kann. Im übrigen erleichtern die Federzungen 15, 16 in erheblichem Maße das Finden der Klipsposition der Profilleiste 4, die immer dann gegeben ist, wenn der Steg 8 über eine der Federzungen 15 oder 16 gleitet, bis er in die Nut 14 einfällt. Besonders wichtig ist es, daß der Abstand zwischen den Längsrändern des Klipskörpers 5 und den freien Enden der Federzungen 15, 16, der in Fig. 3 mit X angegeben ist, größer ist, als der Abstand zwischen dem mittleren Profilleistensteg 8 und der Verdickung 10 an den äußeren Profilleistenstegen 7 und 9. Diese Maßnahme ermöglicht es nämlich, daß die Profilleiste 4, wie in Fig. 1 mit strichpunktierten Linien gezeigt, durch nur einseitiges Rasten bzw. Einhängen vormontiert werden kann, wodurch die Klipsmontage der Profilleiste 4 wesentlich erleichtert wird. Die Federzungen 15, 16 lassen sich in Pfeilrichtung P um den Drehpunkt 17 herum leicht bewegen, stützen andererseits aber, wie in Fig. 1 gezeigt, die Profilleiste 4 rückseitig ab, so daß zwischen der Profilleiste 4 und dem Klipskörper 5 eine völlig wackelfreie Verbindung besteht.

Wie in Fig. 1 gezeigt, ist der Klipskörper 5 mittels eines Trägerprofilstreifens 6 an einer Fahrzeugkarosserie festlegbar. Der Trägerprofilstreifen 6 weist dabei einen Schenkel 18 mit einem hutprofilartigen Querschnitt auf, und besitzt von der Fahrzeugkarosserie abstehende Flansche 19, die von Hakenansätzen 20, 21, die sich an der Rückseite 11 des Klipskörpers 5 befinden, hintergriffen werden. Bei der Montage wird der Klipskörper 5 beispielsweise mit dem Hakenansatz 21 über einen Flansch 19 gehängt und mit dem Hakenansatz 20 über den anderen Flansch 19 des Trägerprofilstreifens 6, der eine dem Klipskörper 5 entsprechende Länge aufweisen kann, geklipst. Der Trägerprofilstreifen 6 weist einen zweiten Schenkel 22 auf, der in nicht näher dargestellter Weise von dem Klebermaterial, das für das Einkleben der Scheibe 3 verwendet wird, gehalten wird. Eine am Schenkel 18 des Trägerprofilstreifens angeordneter Klebefilm 23 dient der Vormontage des Trägerprofilstreifens 6.

## Patentansprüche

1. Profilleiste (4) mit Befestigungselement zur Anordnung an Kraftfahrzeugen, insbesondere Bussen, wobei die Profilleiste (4) an ihrer Rückseite mit einem mittig angeordneten, sich in Profilleistenlängsrichtung erstreckenden Steg (8) ausgebildet ist und wobei das Befestigungselement aus einem Klipskörper (5) besteht, der mit seiner Rückseite (11) an einer Fahrzeugkarosserie festlegbar ist und der eine mittig angeordnete, langsdurchlaufende Nut (14) zur Aufnahme des mittigen Profilleistensteges (8) aufweist, dadurch gekennzeichnet, daß die Profilleiste (4) an ihrer Rückseite mit drei im Abstand nebeneinander angeordneten, sich in Profilleistenlängsrichtung parallel zueinander erstreckenden Stegen (7, 8, 9) ausgebildet ist, von denen die äußeren an ihren freien Endbereichen gegeneinander gerichtete Verdickungen (10) aufweisen und daß der Klipskörper (5) Längsränder aufweist, die als zur Rückseite (11) des Klipskörpers (5) hin schräg gestellte, jedoch von der Rückseite (11) beabstandete Federarme (12) ausgebildet sind und dazu dienen, die Verdickungen (10) der äußeren Profilleistenstege (7, 9) zu hinterrasten, daß der Klipskörper (5) in seinem mittleren Bereich zwei in Längsrichtung gesehen hintereinander angeordnete Federzungen (15, 16) aufweist, die schräg nach oben gestellt sind und die Nut (14) des Klipskörpers (5) einmal von links und einmal von rechts her bereichsweise übergreifen, daß die freien Enden der Federzungen (15, 16) soweit voneinander beabstandet sind, daß der mittlere Profilleistensteg (8) mit erheblichem Spiel durch diese hindurch in die Nut (14) eingeführt werden kann, und daß der Abstand zwischen den Längsrändern des Klipskörpers (5) und den freien Enden der Federzungen (15, 16) größer ist als der Abstand zwischen dem mittleren Profilleistensteg (8) und der Verdickung (10) an den äußeren Profilleistenstegen (7, 9).

2. Profilleiste mit Befestigungselement nach Anspruch 1, dadurch gekennzeichnet, daß der Klipskörper (5) mittels eines Trägerprofilstreifens (6) an einer Fahrzeugkarosserie festlegbar ist, wobei der Trägerprofilstreifen (6) einen Schenkel (18) mit einem hutprofilartigen Querschnitt und mit von der Fahrzeugkarosserie abstehenden Flanschen (19) aufweist, die von Hakenansätzen (20, 21), die sich an der Rückseite (11) des Klipskörpers (5) befinden, hintergriffen werden.

## Claims

1. A section strip (4) with a fastening element for arrangement on motor vehicles, especially buses, in which the section strip (4) is constructed on its reverse side with a centrally arranged web (8) extending in the longitudinal direction of the section strip and in which the fastening element comprises a clip body (5), which is able to be secured with its reverse side (11) on a vehicle body and which has a centrally arranged groove (14), extending longitudinally, to receive the central section strip web (8), characterised in that the section strip (4) is constructed on its reverse side with three webs (7,8,9) arranged adjacent to but spaced apart from one another and extending parallel to each other in the longitudinal direction of the section strip, the outer of which webs have on their free end regions thickenings (10) directed towards each other and that the clip body (5) has longitudinal edges, which are constructed as spring arms (12) placed obliquely towards the reverse side (11) of the clip body (5) but at a distance from the reverse side (11) and which serve to engage behind the thickenings (10) of the outer section strip webs (7,9), that the clip body (5) has in its central region two spring tongues (15,16) arranged one behind the other when viewed in longitudinal direction, which tongues are placed obliquely upward and extend partially over the groove (14) of the clip body (5), one from the left and one from the right, that the free ends of the spring tongues (15, 16) are spaced so far apart from each other that the central section strip web (8) can be introduced with considerable play therethrough into the groove (14), and that the distance between the longitudinal edges of the clip body (5) and the free ends of the spring tongues (15,16) is greater than the distance between the central section strip web (8) and the thickening (10) on the outer section strip webs (7,9).

2. A section strip with fastening element according to Claim 1, characterised in that the clip body (5) is able to be fastened by means of a carrier section strip (6) on a vehicle body, in which the carrier section strip (6) has a limb (18) with a hat-like cross-section and with flanges (19) projecting from the vehicle body, the reverse sides of which are engaged by hook extensions (20,21) which are situated on the reverse side (11) of the clip body (5).

## Revendications

1. Baguette profilée (4) avec élément de fixation à placer sur des véhicules automobiles, en particulier des bus, la baguette profilée (4) présentant, sur sa face arrière, une nervure (8) placée au centre, s'étendant dans la direction longitudinale de la baguette profilée, et l'élément de fixation étant constitué d'un corps de clipsage (5), qui peut être fixé avec sa face arrière (11) contre une carrosserie de véhicule et qui présente une rainure (14) longitudinale, continue, placée au centre, destinée à recevoir la nervure (8) centrale de la baguette profilée, caractérisée en ce que la baguette profilée (4) présente, sur sa face arrière, trois nervures (7, 8, 9) parallèles entre elles, espacées, s'étendant dans la direction longitudinale de la baguette profilée, dont les nervures extérieures présentent, dans leurs zones d'extrémité libres, des surépaisseurs (10) dirigées les unes vers les autres et en ce que le corps de clipsage (5) présente des bords longitudinaux qui sont des bras de ressort (12) disposés obliquement vers la face arrière (11) du corps de clipsage (5), mais espacés de la face arrière (11) et servent à accrocher par derrière les surépaisseurs (10) des nervures (7, 9) extérieures de la baguette profilée, en ce que le corps de clipsage (5) présente dans sa zone centrale, deux languettes de ressort (15, 16) disposées l'une derrière l'autre, vues dans la direction longitudinale, qui sont inclinées obliquement vers le haut et qui passent par endroits, une fois de la gauche et une fois de la droite sur la rainure (14) du corps de clipsage (5), en ce que les extrémités libres des languettes de ressort (15, 16) sont espacées l'une de l'autre suffisamment pour que la nervure centrale (8) de la baguette profilée puisse être introduite avec un très grand jeu à travers celles-ci dans la rainure (14) et en ce que la distance séparant les bords longitudinaux du corps de clipsage (5) et les extrémités libres des languettes de ressort (15, 16), est supérieure à la distance séparant la nervure centrale (8) de la baguette profilée et la surépaisseur (10) se trouvant sur les nervures extérieures (7, 9) de la baguette profilée.

2. Baguette profilée avec élément de fixation selon la revendication 1, caractérisée en ce que le corps de clipsage (5) peut être fixé au moyen d'une bande profilée de support (6) sur une carrosserie de véhicule, la bande profilée de support (6) présentant une branche (18) avec une section transversale profilée en chapeau et avec des brides (19) faisant saillie de la carrosserie du véhicule, derrière lesquelles passent des prolongements de crochet (20, 21) qui se trouvent sur la face arrière (11) du corps de clipsage (5).
